# EUROPEAN PATENT APPLICATION

(11) **EP 2 615 863 A1**
(43) Date of publication of application: **17.07.2013**
(21) Application number: 11786111.2
(22) Date of filing: 02.06.2011
(51) Int. Cl.: H04W 24/10

(54) **METHOD, EQUIPMENT AND SYSTEM FOR USER EXPERIENCE MEASUREMENT**

(30) Priority: 09.09.2010 CN 201010277059
(71) Applicant: Huawei Technologies Co., Ltd., Shenzhen, Guangdong 518129 (CN)
(72) Inventor: HUANG, Ying, Guangdong 518129 (CN); QIU, Yong, Guangdong 518129 (CN)
(74) Representative: Epping - Hermann - Fischer
(86) International application number: PCT/CN2011/075220
(87) International publication number: WO 2011/147339

(57) **Abstract**

A method for user experience measurement, comprising: receiving, by a user equipment, configuration information of user experience measurement sent from a base station, wherein the configuration information of user experience measurement includes a user experience measurement object; measuring, by the user equipment, the user experience measurement object to obtain measurement value of the user experience measurement object; generating, by the user equipment, a user experience measurement result according to the measurement value of the user experience measurement object; and reporting, by the user equipment, the user experience measurement result to the base station through a signaling message. With the technical solution provided by a present embodiment, the user equipment can initiatively report the user experience measurement result in time, and the efficiency of report and collection of the user experience and network self-optimization is improved.

## Description

The present application claims the priority of Chinese Patent Application No. 201010277059.7, filed in Chinese Patent Office on September 9, 2010, entitled "Method, Device and System for User Experience Measurement", the entire contents of which are incorporated herein by reference.

### Field of Invention

The present invention relates to communication technologies, and particularly, to a measurement technique of quality of user experience.

### Background of the Invention

In field of communication and computer network, quality of service (Quality of Service, QoS) is traditionally adopted to measure communication quality of a service or a network. QoS is usually comprehended as a performance index of transmission of packet data in a bottom layer, such as jittering, bandwidth, and error code. However, for evaluation of the communication quality, it is more important to depend on user experience on quality of service. Quality of experience (Quality of Experience, QoE) of a user is a concept in the communication filed, which measures user satisfaction of a specific service.

Different services are usually provided by different web servers, and these servers are distributed dispersedly and they might crosses different security domains, administration domains (i.e., different operators), or geographical domains. Therefore, these dispersed web servers collect QoE by performing user survey, analyze the collected QoE off-line, and then perform network optimization manually according to an analyzed result, which leads to a high cost, and poor operational timeliness of collection, analysis and handle.

### Summary of the Invention

In one aspect, the present invention provides a method for user experience measurement, including: receiving, by a user equipment, configuration information of user experience measurement sent from a base station, wherein the configuration information of user experience measurement includes a user experience measurement object; measuring, by the user equipment, the user experience measurement object to obtain a measurement value of the user experience measurement object; generating, by the user equipment, a user experience measurement result according to the measurement value of the user experience measurement object; and reporting, by the user equipment, the user experience measurement result to the base station through a signaling message.

In another aspect, the present invention provides a user equipment, including: a receiving unit, configured to receive configuration information of user experience measurement sent from a base station, wherein the configuration information of user experience measurement includes a user experience measurement object; a measuring unit, configured to measure the user experience measurement object to obtain a measurement value of the user experience measurement object; a generating unit, configured to generate a user experience measurement result according to the measurement value of the user experience measurement object; and a reporting unit, configured to report the user experience measurement result to the base station through a signaling message.

In another aspect, the present invention provides a base station, including: a sending unit, configured to send configuration information of user experience measurement to a user equipment through a signaling message, wherein the configuration information of user experience measurement includes a user experience measurement object; and a receiving unit, configured to receive a user experience measurement result which is generated and reported by the user equipment according to the configuration information of user experience measurement.

In another aspect, the present invention further provides a system for user experience measurement, including the user equipment and the base station mentioned above.

In another aspect, the present invention further provides a user equipment, including: an inputting unit, used for manually inputting a user experience level on the user equipment by the inputting unit; and a sending unit, configured to send the user experience level to a network device through a measurement report or a specific RRC message.

With the above-described technical solutions, a user equipment measures a user experience measurement object, generates a user experience measurement result and reports the user experience measurement result to a base station, so that the user equipment can initiatively report the user experience measurement result in time, and the base station can obtain the user experience measurement result in time, which improves the efficiency of report and collection of the user experience and network self-optimization.

### Brief Description of the Drawings

FIG. 1 is a schematic flowchart of a method for user experience measurement provided by an embodiment of the present invention;
FIG.2 is a schematic flowchart of a control method for user experience measurement provided by an embodiment of the present invention;
FIG.3 is a schematic structural diagram of a user equipment provided by an embodiment of the present invention;
FIG.4 is a schematic structural diagram of a base station provided by an embodiment of the present invention;
FIG.5 is a schematic structural diagram of a system for user experience measurement provided by an embodiment of the present invention;
FIG.6 is a schematic structural diagram of another user equipment provided by an embodiment of the present invention.

### Embodiments of the Invention

The embodiments of the present invention will be described in detail hereinafter with reference to the accompanying drawings.

It can be understood for a person skilled in the art that the "base station" described in the embodiments can be different access network devices in different access technologies, such as a base station (Base Station, BS), an evolved base station eNB, a radio network controller (Radio Network Controller, RNC)/a node B(Node B), or a base station controller (Base Station Controller, BSC for short)/a base transceiver station (Base Transceiver Station, BTS). In order to describe conveniently, they are all referred to as "base station" simply in the respective embodiments below.

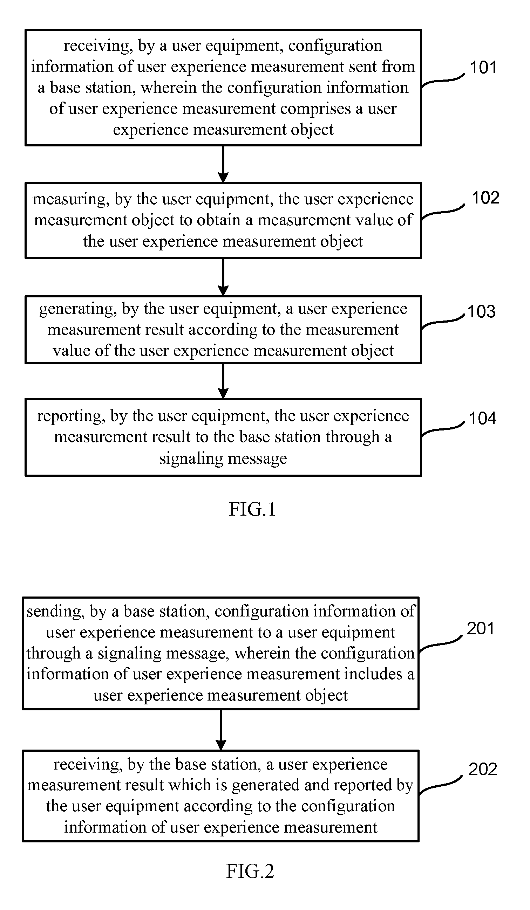

A method for user experience measurement provided by an embodiment is shown in FIG. 1, including:
101, receiving, by a user equipment, configuration information of user experience measurement sent from a base station, wherein the configuration information of user experience measurement includes a user experience measurement object. Alternatively, the configuration information of user experience measurement further includes a correspondence between a threshold of the user experience measurement object and a user experience level.

Alternatively, the configuration information of user experience measurement may be configured separately for a user equipment in active state and a user equipment in idle state, or may be configured uniformly and with no difference between a user equipment in active state and a user equipment in idle state.

Specifically, the user experience measurement object includes one or more pieces of information as follows: information that a user initiatively hangs up a service abnormally, information of a user experience level, delay information (such as, a response delay of VOIP service, a page access delay for the first time, etc.), information of bit error rate, information of retransmission times, information of abnormal service interruption times, information of call failure (such as call failure times or call failure rate), call success rate, one-way, jittering, information of page refresh failure (such as, page refresh failure times or page refresh failure rate), page refresh success rate, download speed, etc.. Alternatively, the user experience measurement object may further includes one or more of time information, wireless environment information, and location information of the user equipment, wherein the location information includes latitude and longitude of user equipment position or a cell ID, and the time information includes an absolute time or an relative time.

102, measuring, by the user equipment, the user experience measurement object to obtain a measurement value of the user experience measurement object.

Alternatively, the measurement value of the user experience measurement object may be an average value obtained by measuring the measurement object in a period of time, or may be a value obtained via other algorithms (such as, a weighted algorithm) in the period of time, or may be a value obtained by a single measurement.

103, generating, by the user equipment, a user experience measurement result according to the measurement value of the user experience measurement object.

104, reporting, by the user equipment, the user experience measurement result to the base station through a signaling message.

Alternatively, the user experience measurement result includes a user experience level corresponding to the measurement value of the user experience measurement object, or includes the measurement value of the user experience measurement object, or includes both a user experience level corresponding to the measurement value of the user experience measurement object and the measurement value of the user experience measurement object.

Alternatively, after the user equipment obtains the measurement value of the user experience measurement object, the user equipment may report the measurement value of the user experience measurement object directly; or the user equipment may determine a user experience level according to the correspondence between the threshold of the user experience measurement object and the user experience level included in the configuration information of user experience measurement, as well as the measurement value of the user experience measurement object, and then report the user experience level corresponding to the measurement value of the user experience measurement object, or report both the user experience level corresponding to the measurement value of the user experience measurement object and the measurement value of the user experience measurement object; or the user equipment may determine a user experience level through a default value, or a protocol, or decision made by the user himself, and then report the user experience level or report both the user experience level and the measurement value of the user experience measurement object.

For example, as shown in FIG.1, when a user equipment measures a user experience measurement object (such as a service response delay), and if the measurement value of the service response delay is less than 200ms (the value is taken as an example, and all numerical values in table 2-5 below are taken as examples, and a user and network may define the threshold according to an actual condition), the user equipment will report a user experience level "good (1)" to the base station, or report a measurement value x of the response delay, or report both the user experience level "good (1)" and the measurement value x of the response delay. The measurement value x of the response delay may be a single measurement value, an average measurement value or a value calculated by other algorithms (such as a weighted algorithm).

At a network side, when the base station receives the measurement value of the response delay reported by the user equipment, the base station may determine a user experience level according to the measurement value of the response delay. For example, as for service of voice over internet protocol (Voice over Internet Protocol, VOIP), the base station may determine that the user experience level is "good (1)" according to the measurement value x of the response delay and the correspondences (as shown in table 1) between the response delay thresholds and the user experience levels.

**table 1 VOIP service**

| response delay threshold | user experience level | user experience measurement value ( ms ) |
|---|---|---|
| delay<200ms | good (1) | x |
| 1s>delay>200ms | common (2) | y |
| delay>1s | bad (3) | z |

As for a same user experience measurement object, different services may have different thresholds of the user experience measurement object. For example, response delay thresholds of paging service shown in table 2, response delay thresholds (that is, thresholds of web page browsing delay) of web page browsing service (web service) shown in table 3, and response delay thresholds of VOIP service shown in table 1 are different.

**table 2 paging service**

| response delay threshold | user experience level | user experience measurement value ( ms ) |
|---|---|---|
| delay≤5ms | good (1) | x |
| 10s>delay≥5ms | common (2) | y |
| delay>10s | bad (3) | z |

**table 3 web service**

| delay threshold | user experience level | user experience measurement value ( ms ) |
|---|---|---|
| delay<500ms | good (1) | x |
| 2s>delay 5ms | common (2) | y |
| delay>2s | bad (3) | z |

Similarly, as for different user experience measurement objects, thresholds thereof and corresponding user experience levels may be also different. For example, the measurement object as shown in table 4 is "abnormal service interruption times". When a user equipment measures the measurement object, and if the abnormal service interruption times are greater than or equal to 2 in a period of time, the user equipment reports a user experience level "bad (3)" to the base station, or report a measurement value z of the abnormal service interruption times, or report both the user experience level "bad (3)" and the measurement value z of the abnormal service interruption times.

At a network side, when the base station receives the abnormal service interruption times reported by the user equipment, the base station may also determine a user experience level according to the abnormal service interruption times. For example, the base station may determine a user experience level "bad (3)" according to the abnormal service interruption times z and the correspondences (as shown in table 4) of the delay thresholds and the user experience levels.

**table 4**

| abnormal service interruption times | user experience level | user experience measurement value ( times ) |
|---|---|---|
| 0 | good (1) | x |
| times=1 | common (2) | y |
| times≥2 | bad (3) | z |

Similarly, as for other user experience measurement objects, for example, delay of uplink packet, call success times/call success rate, or one-way occurrence times, thresholds of measurement objects and corresponding user experience levels may be different. The user equipment, according to a measurement value of the measurement object in a period of time and a correspondence between a threshold scope where the measurement value fall and user experience levels, reports a user experience level to the base station, or reports both the user experience level and the measurement value of the measurement object, or reports the measurement value of the measurement object. The measurement value of the measurement object may be a statistical value for a period of time.

As another embodiment, the user equipment may count times that a user initiatively hangs up (hang up) a service abnormally caused by poor quality of service in a period of time, and report a user experience level of the service, or report the times that the service is initiatively hung up abnormally, or report both the user experience level of the service and the times that the user equipment initiatively hangs up the service abnormally, as shown in table 5, wherein n and m may be preset by the system.

**table 5**

| threshold of times that a service is initiatively hung up abnormally | user experience level | user experience measurement value ( times ) |
|---|---|---|
| 0 | good (1) | x |
| times≥n | common (2) | y |
| times≥rn | bad (3) | z |

Specifically, for example, when a radio resource control (Radio Resource Control, RRC) layer of a user equipment receives a command requiring the user equipment to initiate an RRC release, and if at least one of the following 5 conditions (but not limited to the 5 conditions) occurs, the user equipment may judge that the reason of the RRC release is that the user equipment could not tolerate a poor quality of service and initiatively hangs up the service abnormally, in this case the times that the service is initiatively hung up abnormally are added by 1.
1) a paging delay is greater than a preset threshold (for example 12ms) and the other party does not answer;
2) a page refresh delay is greater than or equal to a preset threshold;
3) an error code rate is greater than a preset threshold;
4) a wireless signal quality is lower than a preset threshold for the network, for example, reference signal received power (Reference Signal Received Power, RSRP), reference signal received quality (Reference Signal Received Quality, RSRQ), received signal strength indicator (Received Signal Strength Indicator, RSSI), signal to interference noise ratio (Signal to Interference Noise Ratio, SINR), or received signal code power (Received Signal Code Power, RSCP) etc. is lower than a preset threshold for the network; and
5) an access delay is greater than a preset threshold.

The "preset threshold" in the above 1)-5) refers to a threshold corresponding to the user experience level "bad" preset by a system.

At a network side, when a base station receives the times that a service is initiatively hung up abnormally sent from a user equipment, the base station may determine a user experience level according to the times that the service is initiatively hung up abnormally. For example, the base station determines the user experience level corresponding to the measurement value, according to the times that the service is initiatively hung up abnormally and the correspondence (as shown in table 5) between the thresholds of times that the service is initiatively hung up abnormally and the user experience levels.

In a particular implementation, as for 101 in the above embodiment, the user equipment may receive the configuration information of user experience measurement from the base station through a minimizing drive test (Minimizing Drive Test, MDT) process. Accordingly, as for 104 in the above embodiment, the user equipment may also report the user experience measurement result to the base station through an MDT process. For example, the user equipment receives MDT control information including the configuration information of user experience measurement sent from a base station. Accordingly, the user equipment report a user experience measurement result to the base station through an MDT measurement report after the user equipment generates the user experience measurement result.

In another way, as for 101 in the above embodiment, the user equipment may receive the configuration information of user experience measurement from the base station through a broadcast message or an RRC message, wherein the RRC message may be a current measurement control message to which an information element of user experience is added, or may be an added RRC message specific to control the user experience measurement. Accordingly, as for 104 in the above embodiments, the user equipment may also report a user experience measurement result to the base station through an RRC message, wherein the RRC message may be a current measurement report message to which an information element of user experience is added, or may be an added RRC message specific to report the user experience. For example, the user equipment receives a system broadcast message or an RRC message sent from a base station, where the system broadcast message or the RRC message includes configuration information of user experience measurement. Accordingly, the user equipment reports a user experience measurement result to the base station through an RRC message after the user equipment generates the user experience measurement result. More specifically, a user equipment, either in active state or in idle state, may report a user experience measurement result to the base station through a specific RRC message, and a user equipment in idle state may report the user experience measurement result carried in an RRC setup complete message or a tracking area update message after initiating an RRC setup process.

Alternatively, when reporting the user experience measurement report, the user equipment may report one or more pieces of information as follows: time information, wireless environment information, and location information of the user equipment, wherein the location information includes latitude and longitude of user equipment position or cell ID, and the time information includes absolute time or relative time.

Alternatively, in 104, the user equipment may report the user experience measurement result by way of real-time report or non-real-time report when the user equipment satisfies a report condition, wherein the non-real-time report may be that the user equipment records the measurement result first and then report when the network is not busy or when a certain report condition is satisfied. The process of the non-real-time report may be that the user equipment reports a user experience measurement result directly to the base station after the user equipment generates the user experience measurement result. The process of non-real-time report may also be that the user equipment sends notification information to the base station first so as to notify the base station that the user equipment has the user experience measurement result to be reported, and then the user equipment reports the user experience measurement result to the base station when the user equipment receives a report indicator of user experience measurement sent from the base station.

With the technical solution provided by the embodiment, a user equipment can initiatively report a user experience measurement result in time, and the efficiency of report and collection of the user experience and network self-optimization is improved.

The following embodiment provides a control method for user experience measurement corresponding to the above embodiment of the method for user experience measurement. The embodiment provides a control method for user experience measurement from a network side, corresponding to the method for user experience measurement performed by the use equipment. Therefore, in the embodiment, the contents about the user experience measurement object and the correspondence between the threshold of the user experience measurement object and the user experience level, are similar to those in the above-mentioned embodiment, which will not be not described redundantly herein. As shown in FIG.2, the embodiment provides the following processes.

201, sending, by a base station, configuration information of user experience measurement to a user equipment through a signaling message, wherein the configuration information of user experience measurement includes a user experience measurement object.

Alternatively, the configuration information of user experience measurement further includes a correspondence between a threshold of the user experience measurement object and a user experience level.

Alternatively, the configuration information of user experience measurement may be configured separately for a user equipment in active state and a user equipment in idle state, or may be configured uniformly and with no difference between a user equipment in active state and a user equipment in idle state.

Alternatively, the base station may receive indicating information of user experience measurement configuration sent from an network management device (for example, Operation Administration and Maintenance system, OAM) before the base station sends the configuration information of user experience measurement to the user equipment through the signaling message, wherein the indicating information of user experience measurement configuration is used for indicating the base station to perform user experience measurement configuration on majority user equipments.

202, receiving, by the base station, a user experience measurement result which is generated and reported by the user equipment according to the configuration information of user experience measurement.

Alternatively, the user experience measurement result includes a user experience level corresponding to a measurement value of the user experience measurement object, or includes a measurement value of the user experience measurement object, or includes both a user experience level corresponding to a measurement value of the user experience measurement object and the measurement value of the user experience measurement object.

The base station may determine a user experience level according to the value of the user experience measurement object when the base station receives the user experience measurement value sent from the user equipment. For example, the base station may determine the user experience level corresponding to the measurement value according to the correspondence between the threshold of the measurement object and the user experience level as well as the measurement value.

During a hand-over process, the configuration information of user experience measurement may be transmitted in user equipment context (context), in a hand-over message, or in other messages (for example, a signaling tracking message).

Alternatively, the method further includes: receiving, by the base station, notification information sent from a user equipment, with which the base station knows that the user equipment has a user experience measurement result to be reported; indicating, by the base station, the user equipment to report the user experience measurement result when the base station decides to let the user equipment report the user experience measurement result.

Alternatively, when reporting a user experience measurement report, the user equipment may report one or more pieces of information as follows: time information, wireless environment information, and location information of the user equipment, wherein the location information includes latitude and longitude of user equipment position or cell ID, and the time information includes absolute time or relative time.

Alternatively, after the base station obtains a user experience measurement result reported from the user equipment, the base station may perform network optimization according to the user experience measurement result, or the base station may send the user experience measurement result to a network management device which performs the network optimization, such as an optimization on a service-related service parameter, which includes adjustment in a QoS parameter, and/or, adjustment in a parameter on the correspondence between the threshold of the user experience measurement object and the user experience level. For another example, the base station or the network management device identifies whether a coverage problem exists, according to the reported location information (latitude and longitude, or cell ID) of the user equipment, quality information (RSRP/RSRQ etc.) of a wireless signal, time information and measurement value of the user experience measurement object, and then optimizes a service priority level, or a buffer size, etc.

Corresponding to the method for user experience measurement shown in FIG.1, in the control method for user experience measurement provided in the present embodiment, as for 201 in the above embodiment, the base station may send the configuration information of user experience measurement to the user equipment through an MDT process. Accordingly as for 202 in the above embodiment, the base station may receive the user experience measurement result reported from the user equipment through an MDT process. For example, a base station sends MDT control information including configuration information of user experience measurement to a user equipment. Accordingly, the user equipment may receive an MDT measurement report including a user experience measurement result sent from the user equipment.

In another way, as for 201 in the above embodiment, the base station may send the configuration information of user experience measurement to the user equipment through a broadcast message or an RRC message. Accordingly, as for 202 in the above embodiment, the base station may obtain a user experience measurement result through receiving an RRC message sent from the user equipment. For example, a base station sends a system broadcast message or an RRC message to a user equipment, where the system broadcast message or the RRC message includes the configuration information of user experience measurement, and the RRC message may be a current measurement control message to which an information element of user experience is added, or may be an added RRC message specific to control the user experience measurement. Accordingly, the base station receives an RRC message (for example, an RRC setup complete message or a tracking area update message) including a user experience measurement result sent from the user equipment, where the RRC message may be a current measurement control message to which an information element of user experience is added, or may be an added RRC message specific to report the user experience.

With the technical solution provided by the embodiment, a base station can control user experience measurement, so that the base station can obtain a user experience measurement result in time, and the efficiency of collection of the user experience and network self-optimization is improved.

The present invention further provides a method for user experience report, including: inputting a user experience level on a user equipment manually. For example, a user manually inputs a level of "good", "common" or "bad" on the user equipment. In a particular implementation, a dialog box may pop up on a user interface of a mobile phone for the user to choose a user experience level. And the user equipment sends the user experience level to a network device through a measurement report or a specific RRC message.

The measurement report includes an MDT measurement report or other measurement reports of the user equipment (for example, a measurement report in a common measuring and reporting process performed by the user equipment). In a practical process, an information element on user experience may be added to an MDT measurement report or a common measurement report; or an RRC message may be added as a specific RRC message used to report the user experience.

Alternatively, the user equipment may receive configuration information of user experience measurement sent from the network device before the user experience level is manually input on the user equipment by a user, wherein the configuration information of user experience measurement is used for notifying the user equipment to perform a user experience measurement. Specifically, the user equipment receives a measurement configuration control message or a specific RRC message sent from the network device, wherein the measurement configuration control message or the specific RRC message includes the configuration information of user experience measurement. The measurement configuration control message includes an MDT measurement configuration control message or other measurement configuration control messages of the user equipment (for example, a measurement configuration control message in a common measurement configuration control process performed by network device). In a particular implementation, an information element of user experience may be added to an MDT measurement configuration control message or a common measurement configuration control message; or an RRC message may be added as a specific RRC used to send the measurement configuration control message of user experience.

With the technical solution provided by the embodiment, a user equipment can initiatively report a user experience measurement result in time, and the efficiency of report and collection of the user experience and network self-optimization is improved.

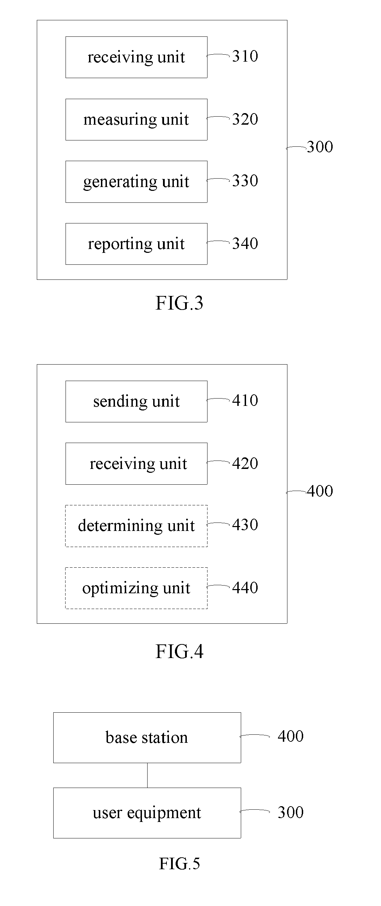

A user equipment 300 is provided in an embodiment as shown in FIG.3, where the user equipment includes a receiving unit 310, a measuring unit 320, a generating unit 330 and a reporting unit 340. The receiving unit 310 is configured to receive configuration information of user experience measurement sent from a base station, where the configuration information of user experience measurement includes a user experience measurement object; the measuring unit 320 is configured to measure the user experience measurement object to obtain a measurement value of the user experience measurement object; the generating unit 330 is configured to generate a user experience measurement result according to the measurement value of the user experience measurement object; and the reporting unit 340 is configured to report the user experience measurement result to the base station by a signaling message.

Alternatively, the configuration information of user experience measurement further includes a correspondence between a threshold of user experience measurement object and a user experience level.

Alternatively, the user experience measurement result includes a user experience level corresponding to the measurement value of the user experience measurement object, or includes the measurement value of the user experience measurement object, or includes both a user experience level corresponding to the measurement value of the user experience measurement object and the measurement value of the user experience measurement object.

Alternatively, the user experience measurement object includes one or more pieces of information as follows: information that a user initiatively hangs up a service abnormally, information of a user experience level, delay information, information of bit error rate, information of retransmission times, information of abnormal service interruption times, information of call failure, call success rate, one-way, jittering, information of page refresh failure, page refresh success rate, download speed, etc.. The user experience measurement object may further include one or more pieces of information as follows: time information, wireless environment information, and location information of the user equipment.

Specifically, the reporting unit 340 is further configured to report the user experience measurement result to the base station through an MDT measurement report or an RRC message. In a particular implementation, the reporting unit 340 may report the user experience measurement result to the base station in an RRC setup complete message or a tracking area update message.

Alternatively, the reporting unit 340 is further configured to send notification information to the base station, to notify the base station that the user equipment has the user experience measurement result to be reported, and to report the user experience measurement result to the base station when the user equipment receives a report indicator of user experience measurement sent from the base station.

The user equipment 300 provided in the embodiment may be used to realize the above-mentioned method shown in FIG.1, and a specific implementation refers to the contents of the specific embodiment shown in FIG.1.

With the technical solution provided by the embodiment, a user equipment can initiatively report a user experience measurement result in time, and the efficiency of report and collection of the user experience is improved.

A base station 400 is provided in an embodiment shown in FIG.4, where the base station includes a sending unit 410 and a receiving unit 420. The sending unit 410 is configured to send configuration information of user experience measurement to a user equipment through a signaling message, wherein the configuration information of user experience measurement includes a user experience measurement object; and the receiving unit 420 is configured to receive a user experience measurement result which is generated and reported by the user equipment according to the configuration information of user experience measurement. During a hand-over process, the configuration information of user experience measurement is included in user equipment context.

Alternatively, the user experience measurement object includes one or more pieces of information as follows: information that a user initiatively hangs up a service abnormally, information of a user experience level, delay information, information of bit error rate, information of retransmission times, information of abnormal service interruption times, information of call failure, call success rate, one-way, jittering, information of page refresh failure, page refresh success rate, download speed, etc.. The user experience measurement object may further include one or more pieces of information as follows: time information, wireless environment information, and location information of the user equipment.

Alternatively, the configuration information of user experience measurement further includes a correspondence between a threshold of the user experience measurement object and a user experience level.

Alternatively, the user experience measurement result includes a user experience level corresponding to the measurement value of the user experience measurement object, or includes the measurement value of the user experience measurement object, or includes both a user experience level corresponding to the measurement value of the user experience measurement object and the measurement value of the user experience measurement object.

Alternatively, the base station 400 further includes a determining unit 430 configured to determine the user experience level according to the measurement value of the user experience measurement object.

In a particular implementation, the sending unit 410 is further configured to send MDT control information, or an RRC message or a system broadcast message to the user equipment, where the MDT control information, or the RRC message or the system broadcast message includes the configuration information of user experience measurement.

Alternatively, the receiving unit 420 is further configured to receive notification information sent from the user equipment, with which the base station knows that the user equipment has a user experience measurement result to be reported. The sending unit 410 is further configured to send a user experience measurement indicator to the user equipment to indicate the user equipment to report the user experience measurement result.

Alternatively, the base station 400 further includes an optimizing unit 440 configured to perform network optimization according to the user experience measurement result, or to send the user experience measurement result to an network management device which performs the network optimization, wherein the network optimization includes adjustment in a quality of service parameter, and/or, adjustment in a parameter on the correspondence between the threshold of the user experience measurement object and the user experience level.

Alternatively, the receiving unit 420 is further configured to receive indicating information of user experience measurement configuration sent from an network management device before the configuration information of user experience measurement is sent to the user equipment, wherein the indicating information of user experience measurement configuration is used for indicating the base station 400 to perform user experience measurement configuration on majority user equipments.

The base station 400 provided in the embodiment may be used to realize the above-mentioned method shown in FIG.2, and the specific implementation refers to the contents of the specific embodiment shown in FIG.2.

With the base station provided by the embodiment, a user equipment can be controlled to perform user experience measurement and report, so that the base station can obtain a user experience measurement result in time, and the efficiency of collection of the user experience and network self-optimization is improved.

As shown in FIG.5, an embodiment further provides a system 500 for user experience measurement including the user equipment 300 shown in FIG.3 and the base station 400 shown in FIG.4. The user experience measurement system may be used to perform the method embodiments shown in FIG. 1 and FIG.2.

With the user experience measurement system provided in the embodiment, the user equipment measures a user experience measurement object, generates a user experience measurement result and sends the user experience measurement result to a base station, so that the user equipment can initiatively report the user experience measurement result in time, and the base station can obtain the user experience measurement result in time, and the efficiency of report and collection of the user experience and network self-optimization is improved.

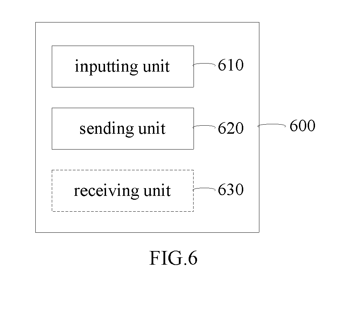

As shown in FIG.6, an embodiment provides a user equipment 600 including an inputting unit 610 and a sending unit 620. The inputting unit 610 is used for manually inputting a user experience level on the user equipment through the inputting unit. For example, a user manually input a level of "good", "common" or "bad" on the user equipment. In a particular implementation, a dialog box may pop up on a user interface of a mobile phone for the user to choose a user experience level. The sending unit 620 is configured to send the user experience level to a network device through a measurement report or a specific RRC message.

The measurement report includes an MDT measurement report or other measurement reports of the user equipment (for example, a measurement report in a common measuring and reporting process performed by the user equipment). In a practical process, an information element on user experience may be added to an MDT measurement report or a common measurement report; or an RRC message may be added as a specific RRC message used to report the user experience.

Alternatively, the user equipment 600 further includes a receiving unit 630. The receiving unit 630 is configured to receive configuration information of user experience measurement sent from the network device before the user experience level is manually input on the user equipment by a user, wherein the configuration information of user experience measurement is used for notifying the user equipment to perform a user experience measurement. Specifically, the receiving unit 630 receives a measurement configuration control message or a specific RRC message sent from the network device, wherein the measurement configuration control message or the specific RRC message includes the configuration information of user experience measurement. The measurement configuration control message includes an MDT measurement configuration control message or other measurement configuration control messages of the user equipment (for example, a measurement configuration control message in a common measurement configuration controlling process performed by network device). In a particular implementation, an information element of user experience may be added to an MDT measurement configuration control message or a common measurement configuration control message; or an RRC message may be added as a specific RRC used to send the measurement configuration control message of user experience.

The user equipment provided by the embodiment can initiatively report a user experience measurement result in time, and the efficiency of report and collection of the user experience and network self-optimization is improved.

A person skilled in the art can understand that all or part of the steps in the methods in the foregoing embodiments may be implemented by a program instructing relevant hardware, and the program may be stored in a computer readable storage medium. When the program is run, the steps of the methods in the foregoing embodiments are performed. The storage medium may be a magnetic disk, an optical disk, a read-only memory (Read-Only Memory, ROM), a random access memory (Random Access Memory, RAM), and so on.

The above-mentioned specific embodiments further illustrate destinations, solutions and beneficial effects of the present invention in detail. It should be understood that the foregoing is only some specific embodiments of the present invention, but not to limit the protection scope of the present invention. Any modifications, substitutions or improvements made by a person skilled in the art without any inventive efforts, shall fall into the protection scope of the present invention.

## Claims

1. A method for user experience measurement, comprising:
receiving, by a user equipment, configuration information of user experience measurement sent from a base station, wherein the configuration information of user experience measurement comprises a user experience measurement object;
measuring, by the user equipment, the user experience measurement object to obtain a measurement value of the user experience measurement object;
generating, by the user equipment, a user experience measurement result according to the measurement value of the user experience measurement object; and
reporting, by the user equipment, the user experience measurement result to the base station through a signaling message.

2. The method according to claim 1, wherein the configuration information of user experience measurement further comprises a correspondence between a threshold of the user experience measurement object and a user experience level.

3. The method according to claim 1 or 2, wherein the user experience measurement result comprises a user experience level corresponding to the measurement value of the user experience measurement object, and/or the measurement value of the user experience measurement object.

4. The method according to claim 3, wherein reporting, by the user equipment, the user experience measurement result to the base station through the signaling message, comprises:
reporting, by the user equipment, the user experience measurement result to the base station through a minimizing drive test (MDT) measurement report or a radio resource control (RRC) message.

5. The method according to claim 4, wherein reporting, by the user equipment, the user experience measurement result to the base station through the RRC message, comprises:
reporting, by the user equipment, the user experience measurement result to the base station in an RRC setup complete message or a tracking area update message.

6. The method according to claim 3, wherein reporting, by the user equipment, the user experience measurement result to the base station, comprises:
sending, by the user equipment, notification information to the base station, to notify the base station that the user equipment has the user experience measurement result to be reported;
reporting, by the user equipment, the user experience measurement result to the base station when the user equipment receives a report indicator of user experience measurement sent from the base station.

7. The method according to claim 3, wherein the user experience measurement object comprises one or more pieces of information as follows:
information that a user initiatively hangs up a service abnormally, information of a user experience level, delay information, information of bit error rate, information of retransmission times, information of abnormal service interruption times, information of call failure, call success rate, one-way, jittering, information of page refresh failure, page refresh success rate, and download speed.

8. The method according to claim 7, wherein the user experience measurement object further comprises one or more pieces of information as follows:
time information, wireless environment information, and location information of the user equipment.

9. The method according to claim 1, wherein receiving, by the user equipment, configuration information of user experience measurement sent from a base station, further comprises:
receiving, by the user equipment, MDT control information, an RRC message, or a system broadcast message sent from the base station, wherein the MDT control information, the RRC message, or the system broadcast message comprises the configuration information of user experience measurement.

10. A user equipment, comprising:
a receiving unit, configured to receive configuration information of user experience measurement sent from a base station, wherein the configuration information of user experience measurement comprises a user experience measurement object;
a measuring unit, configured to measure the user experience measurement object to obtain a measurement value of the user experience measurement object;
a generating unit, configured to generate a user experience measurement result according to the measurement value of the user experience measurement object; and
a reporting unit, configured to report the user experience measurement result to the base station through a signaling message.

11. The user equipment according to claim 10, wherein the configuration information of user experience measurement further comprises a correspondence between a threshold of user experience measurement object and a user experience level.

12. The user equipment according to claim 10 or 11, wherein the user experience measurement result comprises a user experience level corresponding to the measurement value of the user experience measurement object, and/or the measurement value of the user experience measurement object.

13. The user equipment according to claim 10, wherein
the reporting unit is further configured to report the user experience measurement result to the base station through a minimizing drive test (MDT) measurement report, a radio resource control (RRC) message, or a system broadcast message.

14. The user equipment according to claim 13, wherein
the reporting unit is further configured to report the user experience measurement result to the base station in an RRC setup complete message or a tracking area update message.

15. The user equipment according to claim 10, wherein
the reporting unit is further configured to send notification information to the base station, to notify the base station that the user equipment has the user experience measurement result to be reported, and to report the user experience measurement result to the base station when the user equipment receives a report indicator of user experience measurement sent from the base station.

16. The user equipment according to claim 10, wherein the user experience measurement object comprises one or more pieces of information as follows:
information that a user initiatively hangs up a service abnormally, information of a user experience level, delay information, information of bit error rate, information of retransmission times, information of abnormal service interruption times, information of call failure, call success rate, one-way, jittering, information of page refresh failure, page refresh success rate, and download speed.

17. The user equipment according to claim 16, wherein the user experience measurement object further comprises one or more pieces of information as follows:
time information, wireless environment information, and location information of the user equipment.

18. The user equipment according to claim 10, wherein
the receiving unit is further configured to receive MDT control information, an RRC message, or a system broadcast message sent from the base station, wherein the MDT control information, the RRC message, or the system broadcast message comprises the configuration information of user experience measurement.

19. A base station, comprising:
a sending unit, configured to send configuration information of user experience measurement to a user equipment through a signaling message, wherein the configuration information of user experience measurement comprises a user experience measurement object; and
a receiving unit, configured to receive a user experience measurement result which is generated and reported by the user equipment according to the configuration information of user experience measurement.

20. The base station according to claim 19, wherein the configuration information of user experience measurement further comprises a correspondence between a threshold of the user experience measurement object and a user experience level.

21. The base station according to claim 19 or 20, wherein the user experience measurement result comprises a user experience level corresponding to a measurement value of the user experience measurement object, and/or the measurement value of the user experience measurement object.

22. The base station according to claim 21, further comprising:
a determining unit, configured to determine a user experience level according to the measurement value of the user experience measurement object.

23. The base station according to claim 19, wherein during a hand-over process, the configuration information of user experience measurement is in user equipment context.

24. The base station according to claim 19, further comprising:
an optimizing unit, configured to perform network optimization according to the user experience measurement result, or to send the user experience measurement result to a network management device which performs the network optimization,
wherein the network optimization comprises adjustment in a quality of service parameter, and/or, adjustment in a parameter on the correspondence between the threshold of the user experience measurement object and the user experience level.

25. The base station according to claim 19, wherein
the receiving unit is further configured to receive indicating information of user experience measurement configuration sent from a network management device before the configuration information of user experience measurement is sent to the user equipment, wherein the indicating information of user experience measurement configuration is used for indicating the base station to perform user experience measurement configuration on majority user equipments.

26. A system for user experience measurement, comprising:
the user equipment according to any one of claims 10-18 and the base station according to any one of claims 19-25.

27. A user equipment, comprising:
an inputting unit, used for manually inputting a user experience level on the user equipment through the inputting unit; and
a sending unit, configured to send the user experience level to a network device through a measurement report or a specific radio resource control (RRC) message.

28. The user equipment according to claim 27, wherein the measurement report comprises a minimizing drive test (MDT) measurement report.

29. The user equipment according to claim 27 or 28, the user equipment further comprising a receiving unit, configured to receive configuration information of user experience measurement sent from the network device before the user experience level is manually input, wherein the configuration information of user experience measurement is used for notifying the user equipment to perform user experience measurement.

30. The user equipment according to claim 29, wherein
the receiving unit is further configured to receive a measurement configuration control message or a specific RRC message sent from the network device, wherein the measurement configuration control message or the specific RRC message comprises the configuration information of user experience measurement.

31. The user equipment according to claim 30, wherein the measurement configuration control message comprises an MDT measurement configuration message.
